(19) Europäisches Patentamt
European Patent Office
Office européen des brevets

(11) Veröffentlichungsnummer: **0 300 161 B1**

(12) **EUROPÄISCHE PATENTSCHRIFT**

(45) Veröffentlichungstag der Patentschrift: **30.12.92**

(51) Int. Cl.⁵: **C08L 23/02**, C08K 5/3435, C08K 5/13, //(C08L23/02, C08K5:13,5:3435)

(21) Anmeldenummer: **88108283.8**

(22) Anmeldetag: **25.05.88**

# (54) Stabilisatorsystem.

(30) Priorität: **22.07.87 DE 3724223**

(43) Veröffentlichungstag der Anmeldung: **25.01.89 Patentblatt 89/04**

(45) Bekanntmachung des Hinweises auf die Patenterteilung: **30.12.92 Patentblatt 92/53**

(84) Benannte Vertragsstaaten: **BE CH DE FR GB IT LI**

(56) Entgegenhaltungen:
**EP-A- 0 154 071**
**DE-A- 3 343 676**
**US-A- 4 035 323**
**US-A- 4 467 061**

(73) Patentinhaber: **HÜLS AKTIENGESELLSCHAFT**
**Patentabteilung / PB 15 - Postfach 13 20**
**W-4370 Marl 1(DE)**

(72) Erfinder: **Disteldorf, Josef, Dr.**
**Dahlbrede 47**
**W-4370 Marl(DE)**
Erfinder: **Libera, Hubert, Dr.**
**Gaussstrasse 17**
**W-4690 Herne 2(DE)**
Erfinder: **Haage, Hans-Jürgen**
**Gaussstrasse 13**
**W-4690 Herne 2(DE)**
Erfinder: **Kirchner, Peter**
**Brünselstrasse 24**
**W-4630 Bochum 1(DE)**

**EP 0 300 161 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Stabilisatorsystem zur Verwendung als Lichtschutzmittel für Polyolefine.

Synthetische thermoplastische Hochpolymere, insbesondere Polyolefine sind dafür bekannt, daß sich ihre optischen und mechanischen Eigenschaften unter dem Einfluß von Licht, Wärme oder Luftsauerstoff verschlechtern, was sich durch Risse, Kreidung, Verfärbung, Versprödung und andere unerwünschte Effekte bemerkbar macht. Zur Verbesserung der Beständigkeit werden daher den Polymeren Stabilisatoren zugesetzt, die diese Abbauerscheinungen vermindern sollen. So werden Polyolefine stets mit einem Zusatz an Antioxidantien versehen, die dem oxidativen Angriff während der Verarbeitung und der späteren Verwendung entgegenwirken. Über diese Grundstabilisierung hinaus ist es üblich, den Polyolefinen zur Gewährleistung einer längeren Gebrauchsdauer, insbesondere bei der Außenanwendung, Lichtstabilisatoren zuzusetzen, da die Antioxidantien die durch den UV-Anteil des Lichtes hervorgerufene Photooxidation nur wenig unterdrücken.

Allgemein gebräuchlich zur Lichtstabilisierung der Polyolefine ist daher auch die Verwendung von UV-Absorbern vom Benzotriazol- oder Benzophenon-Typ und/oder Nickel-Quenchern. Mit diesen Stabilisatoren läßt sich eine wesentliche Verbesserung der Lichtstabilität der Polyolefine erreichen, jedoch weisen sie auch noch Schwachpunkte auf. So ist z. B. im Falle der UV-Absorber gemäß dem Beer-Lambert'schen Gesetz, wonach die Effektivität von UV-Absorbern exponentiell mit der Konzentration und dem Abstand von der Oberfläche zunimmt, nur ein unzureichender Oberflächenschutz gegeben, was sich besonders bei dünnen Schichten (Folien, Fasern) in frühzeitig auftretenden Oberflächenrissen bemerkbar macht. Nickel-Quencher wirken zwar auch bereits in dünnen Schichten, besitzen jedoch wie auch die Benzophenone eine Eigenfärbung, die die Anwendbarkeit stark limitiert.

Eine erhebliche Steigerung der Lichtbeständigkeit von Polyolefinen kann erzielt werden, wenn man als Lichtschutzmittel Derivate des Polyalkylpiperidins verwendet. Diese zur Klasse der sterisch gehinderten Amine gehörenden Substanzen sind als die wirksamsten Lichtstabilisatoren für Polyolefine bekannt. Bevorzugt zum Einsatz gelangt dabei für Polyolefine der Sebacinsäure-bis-2,2,6,6-tetramethyl-4-piperidindylester, der z. B. unter dem Handelsnamen TINUVIN[R] 770 von der Fa. Ciba-Geigy vertrieben wird und den größten Marktanteil unter den sterisch gehinderten Aminen besitzt.

Ester des Polyalkyl-4-piperidinols mit Mono-, Di- und Polycarbonsäuren sind seit langem bekannt und beispielsweise in der DE-OS 19 29 928 beschrieben. Danach werden synthetische Polymere, wie Polyolefine, Polyvinylchlorid, Polyvinylidenchlorid, Polyurethane und Polyamide, gegen Photo- und Thermozersetzung stabilisiert, wenn sie u. a. Ester der Formel

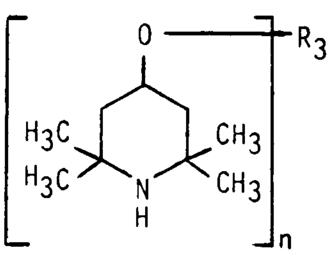

enthalten, wobei im Falle eines Esters einer aliphatischen Monocarbonsäure n = 1 und $R_3$ einen gegebenenfalls durch Phenyl- oder Phenoxygruppen substituierten aliphatischen Monoacylrest mit 2 bis 18 C-Atomen und im Falle eines Esters einer aliphatischen Dicarbonsäure n = 2 und $R_3$ einen aliphatischen Diacylrest darstellt. Die tabellarische Bewertung der Verbindungen zeigt hinsichtlich ihrer lichtstabilisierenden Wirkung eine eindeutige Überlegenheit der Dicarbonsäureester gegenüber den Monocarbonsäureestern des 2,2,6,6-Tetramethyl-4-piperidinols.

In der Folgezeit wurde eine Vielzahl von Patentschriften und Literatur veröffentlicht, die sich mit weiteren Modifikationen des Estermoleküls (vgl. DE-OSS 22 04 659, 22 58 752, 26 21 870, 32 33 943) oder dem Anfügen anderer Strukturelemente an das 2,2,6,6-Tetraalkylpiperidin befassen.

Darüber hinaus wird häufig auch der Einsatz von Gemischen dieser Verbindungen mit anderen Additiven zur Lichtstabilisierung beschrieben, wobei je nach Struktur, Stabilisierungsmechanismus und bei der Photolyse auftretenden Zwischenprodukten synergistische, additive oder antagonistische Effekte auftreten können. Über synergistische Effekte zwischen TINUVIN 770 und Benzotriazol-Absorbern in Polypropylenplatten berichtet Gugumus in Developments in polymer stabilization - 1, Ed. G. Scott, Appl. Science Publishers, London, (1979), Seiten 280 bis 308. Nach Allen et al. in Polymer Degrad. Stab., 2 (1980), Seite 129 ff., und 3 (1981), Seite 199, konnte dagegen in Polypropylenfolien mit Benzophenon- und Benzotriazol-Gemischen keine verstärkende Wirkung beobachtet werden. Entsprechend den Angaben einer Untersuchung über die Wechselwirkung von sterisch gehinderten Piperidinen und UV-Absorbern bei der Lichtstabilisierung von Polybutadien von Lucki in Polymer Photochemistry 6, (1985), Seiten 273 bis 291, besteht ein Antagonismus zwischen UV-Absorbern des Benzophenon-Typs und sterisch gehinderten Piperidinen, ein Synergismus wurde jedenfalls auch mit Benzotriazol-Absorbern nicht festgestellt.

So zeigt auch die "Technische Information" über das TINUVIN 770 der Fa. Ciba-Geigy aus den Jahren 1975/1977/1980 in den Diagrammen zur Lichtbeständigkeit bei der Kombination mit Benzotriazol-Absorbern bei Polyethylenfolien keinen und bei Polypropylen in dünnen oder dicken Schichten ebenfalls keinen bzw. nur schwachen Synergismus. Folglich wird auch nur darauf hingewiesen, daß bei dicken Schichten die Mitverwendung von UV-Absorbern zusätzliche Vorteile bringen kann. Bei der Untersuchung mit ABS-Polymeren als Substrat ist wiederum eine deutliche synergistische Wirkung des Stabilisatorgemisches festzustellen.

Ebenfalls gesteigerte bzw. synergistische Lichtschutzwirkung von Gemischen sterisch gehinderter Piperidine mit Benzotriazolen bei der Lichtstabilisierung von PVC, ABS, PUR, Polyamiden, vernetzten Polyolefin-Schäumen, Metallpigment-haltigen Acrylat- und Polyesterlacken sind z. B. in den DE-OSS 24 17 535, 33 43 676 und den EP-PSS 0 002 753, 0 154 071, 0 180 992 beschrieben. Diese Stabilitätsprüfungen wurden in allen Fällen vorzugsweise mit sterisch gehinderten Piperidinen des Di-oder Polycarbonsäureester-Typs bzw. polymeren Estern durchgeführt. Über das Verhalten aliphatischer Monocarbonsäureester in diesem Zusammenhang ist nichts bekannt.

Bei den zur Prüfung der Lichtschutzwirkung angewandten Bewertungskriterien, die in der Literatur beschrieben sind, handelt es sich praktisch ausschließlich um Messungen, die sich auf die mechanischen Eigenschaften eines Polymers beziehen, wie z. B. Rest-Reißfestigkeit, Rest-Dehnung, Knicktest, Reduktion der Schmelzviskosität, Carbonyl-Index etc. Lediglich bei der Stabilisierung von Lacken werden auch Kriterien wie Oberflächenglanz und Rißbildung beurteilt. Das heißt, der eigentlich bedeutendste Aspekt der Lichtschutzwirkung von sterisch gehinderten Aminen, nämlich der überragende Oberflächenschutz, wird bei der Prüfung von Polymeren ungerechtfertigterweise nicht berücksichtigt. Eine optisch einwandfreie Oberflächenbeschaffenheit ist nicht nur aus dekorativen Gründen ein wichtiges Kriterium bei der Beurteilung der Gebrauchseigenschaften eines polymeren Werkstoffes. Es hat sich in der Praxis gezeigt, daß sich bei der Kombination von sterisch gehinderten Aminen mit UV-Absorbern die Reißfestigkeit, der Knicktest usw. dann nicht mehr als aussagekräftig erweisen, wenn die Rißbildung relativ früh einsetzt. Durch die zunehmende Zerstörung der Oberfläche wird offensichtlich infolge Streuung und Absorption das Eindringen der schädigenden UV-Strahlung so weit reduziert, daß sich die mechanischen Daten längere Zeit auf höherem Niveau halten als dies bei eine System mit sehr spätem Rißbildungsbeginn der Fall ist. Trotz ausreichender mechanischer Eigenschaften ist eine Gebrauchsfähigkeit nicht mehr gegeben. Eine relativ frühe Rißbildungstendenz zeigen sterisch gehinderte Amine vom Typ der Dicarbonsäureester, wie TINUVIN 770.

Aufgabe der Erfindung war es, ein Stabilisatorsystem bereitzustellen, das Polyolefinen eine verbesserte Beständigkeit gegenüber Licht sowie thermischen und oxidativen Abbau und insbesondere einen hohen Oberflächenschutz durch geringere Rißbildung verleiht.

Es wurde nun überraschend gefunden, daß Ester des Polyalkyl-4-piperidinols mit bestimmten Monocarbonsäuren im Gemisch mit UV-Absorbern vom Benzotriazol- oder Benzophenon-Typ einen ausgeprägten Synergismus bei der Lichtschutzwirkung in Polyolefinen aufweisen, der im Vergleich mit dem bekannten, handelsüblichen und bevorzugt eingesetzten Sebacinsäurediester des 2,2,6,6-Tetramethyl-4-piperidinols, insbesondere hinsichtlich der Rißbildungsbeständigkeit, als überragend zu betrachten ist. Dies konnte nicht erwartet werden, da beide als Ester der gleichen chemischen Strukturklasse angehören, die Monocarbonsäureester aber einen bis auf die Hälfte reduzierten Wirkgruppengehalt (sterisch gehinderter Piperidin-Stickstoff) besitzen. Keineswegs vorhersehbar war schließlich auch, daß die Lichtschutzwirkungen der Kombinationen von Monocarbonsäureester mit UV-Absorbern denen überlegen sein würden, die mit der Kombination TINUVIN 770/UV-Absorber erzielt werden können.

Besonders deutlich wird die Überlegenheit des Stabilisatorsystems Monocarbonsäureester/UV-Absorber gegenüber dem System Sebacinsäurediester/UV-Absorber, wenn der Anteil an sterisch gehindertem Piperidin-Stickstoff nach dem Prinzip der Wirkgruppenäquivalenz auf das gleiche Niveau gebracht wird, was bei gleichen Molmassen (Behensäureester) praktisch zu einer Verdoppelung der Einsatzmenge des Monocarbonsäureesters zum Polyolefin führen kann. Dieses Vorgehen ist u. a. auch durch die wesentlich günstigeren Herstellungskosten und Herstellungsbedingungen der Monocarbonsäureester ohne Nachteil.

Gegenstand der Erfindung ist daher ein Stabilisatorsystem zur Stabilisierung von Polyolefinen gegen

Licht, Wärme und oxidativen Abbau, enthaltend

a) einen Monocarbonsäureester eines Polyalkyl-4-piperidinols der allgemeinen Formel

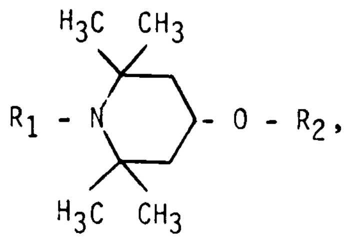

worin $R_1$ Wasserstoff, einen Alkylrest mit 1 bis 5 C-Atomen, einen Allyl- oder Benzylrest oder einen Acylrest mit 1 bis 4 C-Atomen und $R_2$ einen von einer aliphatischen, geradkettigen oder verzweigten und gegebenenfalls ungesättigten Säure mit 16 bis 24 Kohlenstoffatomen abgeleiteten Acylrest bedeuten und

b) einen UV-Absorber vom Benzophenon- oder Benzotriazol-Typ.

Beispiele für die erfindungsgemäß einzusetzenden Monocarbonsäureester des Polyalkyl-4-piperidinols sind 2,2,6,6-Tetramethyl-4-piperidinyl-hexadecanoat, 2,2,6,6-Tetramethyl-4-piperidinyl-octadecanoat, 2,2,6,6-Tetramethyl-4-piperidinyl-docosanoat, 1,2,2,6,6-Pentamethyl-4-piperidinyl- octadecanoat und 1,2,2,6,6-Pentamethyl-4-piperidinyl-docosanoat.

Die genannten Docosansäureester an sich sind Gegenstand einer gesonderten Patentanmeldung.

Als besonders geeignet erwiesen sich die Verbindungen 2,2,6,6-Tetramethyl-4-piperidinyl-octadecanoat und 2,2,6,6-Tetramethyl-4-piperidinyl-docosanoat. Es können natürlich auch Gemische der Ester eingesetzt werden, wobei es unerheblich ist, ob diese Gemische durch Abmischung der Einzelester oder bereits bei der Herstellung der Ester durch Verwendung von Säuregemischen entstehen.

Die Ester besitzen gute hydrolytische Beständigkeit. Sie sind in Polyolefinen gut löslich und bewirken in niedrigen Konzentrationen eine Stabilisierung gegen den photochemischen Abbau. Geringe Flüchtigkeit sowie gute Migrations- und Extraktionsbeständigkeit gewährleisten eine Langzeitwirkung auf hohem Niveau.

Die zur Herstellung der erfindungsgemäß einzusetzenden Ester bevorzugt eingesetzten Ausgangsstoffe 2,2,6,6-Tetramethyl-4-piperidinol oder 1,2,2,6,6-Pentamethyl-4-piperidinol sind wie die Monocarbonsäuren als Handelsprodukte erhältlich. Aufgrund ihres nativen Ursprungs können die höheren Monocarbonsäuren je nach Aufarbeitungsgrad noch Beimischungen von niederen und höheren, gegebenenfalls ungesättigten Carbonsäuren sowie andere herkunftsbedingte Verunreinigungen enthalten. Zum Beispiel hat eine im Handel erhältliche Behensäure die typische Zusammensetzung von etwa 87 % $C_{22}$-Säure (Behensäure), 6 % $C_{20}$ -Säure, 4 % $C_{18}$-Säure und je 1 % $C_{16}$- und $C_{24}$-Säure.

Die gegenüber den Dicarbonsäureestern kostengünstigere Herstellung dieser Monocarbonsäureester kann in wirtschaftlicher Weise und hohen Ausbeuten nach den allgemein bekannten Verfahren der Veresterung erfolgen:

a) Direkte Veresterung der Monocarbonsäure mit dem Polyalkyl-4-piperidinol unter Verwendung eines Katalysators, wie z. B. Aluminiumtriisopropylat oder Dibutylzinnoxid, gegebenenfalls zur Entfernung des Wassers mit einem Schleppmittel (z. B. Hexan) oder in hochsiedenden Lösemitteln (z. B. Xylol, Dekalin) mit Wasserabscheidung.

b) Umesterung eines niedrigen Alkylesters der Monocarbonsäure mit Polyalkyl-4-piperidinol in Gegenwart eines Katalysators, wie Tetraisopropyltitanat, gegebenenfalls unter Verwendung eines Lösemittels, das höher siedet als der niedrige aliphatische Alkohol des Esters.

Zur Reaktion werden die Säure-Komponente und das Polyalkyl-4-piperidinol in einem Molverhältnis miteinander vermischt, daß die leichter siedende Verbindung im Überschuß vorliegt. Die Reaktion wird bei 200 °C unter Entnahme des abgespaltenen Wassers oder Alkohols durchgeführt, wonach man die nicht reagierten Anteile im Vakuum abtrennt. Die anschließende Reinigung wird durch Destillation im Dünnschichtverdampfer vorgenommen.

Als erfindungsgemäß verwendbare UV-Absorber vom Benzophenon- und Benzotriazol-Typ werden beispielsgemäß die folgenden genannt: 2-(2-Hydroxy-5-methylphenyl)-benzotriazol, 2-(3,5-Di-tert.-butyl-2-hydroxyphenyl)-benzotriazol, 2-(3-tert.-Butyl-2-hydroxy-5-methylphenyl)-benzotriazol, 2-(3,5-Di-tert.-amyl-2-hydroxyphenyl)-benzotriazol, 5-Chlor-2-(3,5-di-tert.-butyl-2-hydroxyphenyl)-benzotriazol, 5-Chlor-2-(3-tert.-butyl-2-hydroxy-5-methylphenyl)-benzotriazol, 2-Hydroxy-4-octoxy-benzophenon, 4-Dodecyloxy-2-hydroxy-benzophenon und 2,4-Dihydroxy-benzophenon.

Das erfindungsgemäße Stabilisatorsystem besitzt eine hervorragende Stabilisierungswirksamkeit bei

synthetischen thermoplastischen Polyolefinen, die dem Abbau durch Licht, Wärme oder Luftsauerstoff unterliegen, vor allem in Polymeren von Mono- oder Diolefinen, wie Ethylen, Propylen, Isobutylen, Buten-1, Methylpenten-1, Isopren, Butadien, Cyclopenten, Dicyclopentadien, Norbornen, Mischungen der Polymeren oder Copolymeren dieser Olefine untereinander, wie z. B. Ethylen-Propylen-Dien-Terpolymere, oder mit anderen Vinylmonomeren, wie z. B. Acrylsäure, Alkylacrylat, Alkylmethacrylat, Acrylnitril, Vinylacetat, Styrol oder Methylstyrol.

Die Menge an einzusetzendem Stabilisatorsystem, bezogen auf das zu stabilisierende Polyolefin beträgt 0,01 bis 5 Gewichtsprozent, vorzugsweise 0,05 bis 1 Gewichtsprozent. Das Verhältnis von sterisch gehindertem Piperidin zu UV-Absorber muß im Einzelfalle entsprechend der späteren Verwendung des Polyolefin-Artikels festgelegt werden und beträgt üblicherweise 3 : 1 bis 1 : 3, vorzugsweise etwa 1 : 1. Die Einarbeitung der Stabilisatoren erfolgt nach an sich bekannten Methoden.

Die zu stabilisierenden Polyolefine können neben dem erfindungsgemäßen Stabilisatorsystem noch weitere Stabilisatoren enthalten, wie phenolische Antioxidantien, Amine, Phosphorverbindungen, Schwefelverbindungen, wobei die Mitverwendung von phenolischen Antioxidantien obligatorisch ist.

Außerdem können die Polyolefine weitere Additive enthalten, die üblicherweise mit Polyolefinen verwendet werden. Dazu gehören beispielsweise Pigmente, Füllstoffe, Farbstoffe, Antistatika, Oberflächenmittel, Gleitmittel, Weichmacher, Flammschutzmittel etc.

Die so stabiliserten Polyolefine sind für eine Vielzahl von industriellen Anwendungen geeignet, sei es als dickwandige Formteile, Folien oder Fasern.

Die folgenden Beispiele sollen die Erfindung erläutern.

Beispiel 1

2,2,6,6-Tetramethyl-4-piperidinyl-octadecanoat

In einem 1-l-Vierhalskolben mit KPG-Rührer, Innenthermometer und kurzer Glaswendelkolonne mit Liebigkühler wurden unter einem gelinden $N_2$-Strom 448g (1,5 mol) Methyl-octadecanoat und 157g (1,0 mol) 2,2,6,6-Tetramethyl-4-piperidinol in Gegenwart von 5 g (8 mmol) Dibutylzinndilaurat 24 Stunden auf 200 °C erwärmt, wobei man 28 g Destillat erhielt.

Anschließend destillierte man bei einer maximalen Sumpftemperatur von 193 °C und einem Druck von 10 kPa 223 g eines rückführbaren Gemisches aus 7,6 % 2,2,6,6-Tetramethyl-4-piperidinol, 79,7 % Methyl-octadecanoat und 9,5 % 2,2,6,6-Tetramethyl-4-piperidinyl-octadecanoat ab. Als Rückstand blieben 355 g des Rohproduktes, das nach Destillation im Dünnschichtverdampfer bei 185 °C/30Pa neben 13,8 g rückführbarem Rückstand 337 g (entspr. 80 % Ausbeute) 2,2,6,6-Tetramethyl-4-piperidinyl-octadecanoat mit einem Schmelzpunkt von 40,5 bis 41,5 °C und einer Basenzahl von 130 mg KOH/g (theor. 132) ergab. Unter Berücksichtigung der rückführbaren Anteile beträgt die Gesamtausbeute 99 %, bezogen auf 2,2,6,6-Tetramethyl-4-piperidinol.

Beispiel 2

1,2,2,6,6-Pentamethyl-4-piperidinyl-octadecanoat

In einem 250-ml-Dreihalskolben mit KPG-Rührer, Innenthermometer und kurzer Glaswendelkolonne mit Liebigkühler wurden unter einem gelinden $N_2$-Strom 74,6 g Methyl-octadecanoat und 64,2 g 1,2,2,6,6-Pentamethyl-4-piperidinol in Gegenwart von 1 g Tetraisopropyltitanat 6 Stunden auf 200 °C erwärmt, wobei man 28 g Destillat erhielt.

Anschließend wurde das nicht umgesetzte 1,2,2,6,6-Pentamethyl-4-piperidinol bei 10 kPa, Reste bei 20 Pa abdestilliert. Es wurden 20,6 g zurückgewonnen.

Der Rückstand enthielt 107,5 g (entspr. 98 % Ausbeute) des Rohproduktes (GC-Reinheit 93,5 %), das nach Destillation einen farblosen Feststoff mit einem Schmelzpunkt von 41 bis 43,5 °C ergab.

Beispiel 3

2,2,6,6-Tetramethyl-4-piperidinyl-docosanoat

In einem 500-ml-Dreihalskolben mit KPG-Rührer, Innenthermometer und kurzer Glaswendelkolonne mit Liebigkühler wurden unter einem gelinden $N_2$-Strom 102 g (0,3 mol) Behensäure (GC-Reinheit: 88,9 % Docosansäure, Rest Homologe) und 70,8 g (0,45 mol) 2,2,6,6-Tetramethyl-4-piperidinol in Gegenwart von 3

g (12 mmol) Dibutylzinnoxid 24 Stunden auf 200 °C erwärmt. Man erhielt eine klare, hellbraune Reaktionslösung mit der Säurezahl 2,5 mg KOH/g (entspr. 97,5 % Umsatz) und ca. 4,5 g eines wäßrigen Destillats.

Anschließend wurde das überschüssige 2,2,6,6-Tetramethyl-4-piperidinol abdestilliert, indem man den Ansatz bei Normaldruck auf 180 °C erwärmte und dann ein Vakuum von ca. 10 kPa anlegte. Das restliche Edukt wurde im Hochvakuum bei Sumpftemperaturen bis 200 °C abgezogen. Dabei wurden 21,3 g (90 % des Überschusses) 2,2,6,6-Tetramethyl-4-piperidinol als heller, rückführbarer Feststoff zurückgewonnen.

Der Rückstand enthielt 136 g (entspr. 94 % Ausbeute) Rohprodukt, Fp. 48 bis 53 °C, Basenzahl 116 mg KOH/g (theor. 117), das nach Destillation im Dünnschichtverdampfer bei 210 °C/30 Pa einen farblosen Feststoff mit einem Schmelzpunkt von 50,5 bis 53 °C und einer Säurezahl <0,1 mg KOH/g ergab.

## Beispiel 4

### 1,2,2,6,6-Pentamethyl-4-piperidinyl-docosanoat

In einem 500-ml-Dreihalskolben mit KPG-Rührer, Innenthermometer und kurzer Glaswendelkolonne mit Liebigkühler wurden unter einem gelinden $N_2$-Strom 106,3 g (0,3 mol) Methyl-docosanoat und 77 g (0,45 mol) 1,2,2,6,6-Pentamethyl-4-piperidinol in Gegenwart von 2 g Aluminiumtriisopropylat 6 Stunden auf 200 °C erwärmt.

Anschließend wurde das nicht umgesetzte 1,2,2,6,6-Pentamethyl-4-piperidinol bei 10 kPa, Reste bei 20 Pa abdestilliert. Dabei wurden 24,4 g (95 % des Überschusses) 1,2,2,6,6-Pentamethyl-4-piperidinol als heller, rückführbarer Feststoff zurückgewonnen.

Der Rückstand enthielt 145,2 g (entspr. 98 % Ausbeute) Rohprodukt, das nach Destillation im Dünnschichtverdampfer mit 100 ml/h bei 220 °C/40 Pa einen farblosen Feststoff mit einem Schmelzpunkt von 53 bis 54 °C und einer Basenzahl von 117 mg KOH/g ergab.

## Beispiel 5

Polypropylen mit dem Schmelzindex MFI 190/5 (DIN 53 735 Code T) von ca. 4 g/10 min und einer Dichte von 0,905 wurde in Chargen von je 800 g mit 0,1 Massenprozent Pentaerythrityl-tetrakis-3-(3,5-di-tert.-butyl-4-hydroxyphenyl)-propionat, 0,1 Massenprozent Calciumstearat und 0,25 bis 0,5 Massenprozent des zu prüfenden Lichtstabilisators in einem Labormischer (Typ Turbula, Fa. Bachofen AG, Basel) intensiv vermischt und das auf diese Weise angepuderte Granulat zwecks Homogenisierung bei einer Temperatur von 220 °C durch einen Einwellenextruder gefahren. Nach Zerkleinerung der extrudierten Polymerstränge in einer Rotoplex-Schneidmühle (Fa. Alpine) wurde das Hackgranulat in einer Schneckenspritzgußmaschine (Typ: Monomat 25, Fa. Krauss-Maffei) bei 220/270/230 °C zu Platten von 60 x 60 x 1 mm verspritzt. Aus diesen wurden Probekörper für den Zugversuch (S2-Stäbe nach DIN 53 504) ausgestanzt. Die als Vergleichsmuster erforderlichen Probekörper wurden analog, jedoch ohne den zu testenden Stabilisator bzw. unter Zusatz des handelsüblichen Vergleichsstabilisators, hergestellt.

Die Ermittlung der Lichtstabilität erfolgte durch Bestrahlung der Probekörper mit Ultra-Vitalux-Lampen der Fa. Osram, die eine sonnenähnliche, von einem Quecksilberhochdruckbrenner und einer Wolframwendel erzeugte Strahlung emittieren. Die Belichtungseinrichtung war mit 16 im Quadrat angeordneten Strahlern ausgerüstet, die im Abstand von 50 cm zwischen Kolbenkuppe und Bestrahlungsgut auf einer quadratischen Fläche von 1 x 1 m eine Bestrahlungsstärke von etwa 1 $kW/m^2$ erzeugen. Am Ort der Probekörper stellte sich eine Schwarzkörpertemperatur von 55 °C ein. Während der Bestrahlung wurde weder eine Befeuchtung der Proben noch der Luft vorgenommen.

Als Maß für die Lichtschutzwirkung der zu untersuchenden Stabilisatoren diente die Expositionszeit bis zum Beginn der Bildung von Oberflächenrissen auf den bestrahlten Spitzgußplatten sowie die Halbwertszeit, unter der die Bestrahlungsdauer verstanden wird, bei der die Reißfestigkeit, nach DIN 53 455 im Zugversuch ermittelt, auf 50 % des Ausgangswertes abgefallen war.

Tabelle I zeigt die unter diesen Bedingungen erhaltenen Ergebnisse, wobei die Konzentrationsangaben in diesem und allen weiteren Beispielen in Massenprozent erfolgen, sofern nichts anderes gesagt ist.

Tabelle I

| Stabilisator | Belichtungszeit bis zum(r) Rißbildungs-beginn (h) | Belichtungszeit bis zum(r) Halbwertszeit (h) |
|---|---|---|
| Kontrollprobe | 80 | 220 |
| 0,25 % Sebacinsäure-bis-2,2,6,6-tetramethyl-4-piperidyl-ester | 520 | 1 090 |
| 0,25 % 2,2,6,6-Tetramethyl-4-piperidyl-octadecanoat | 760 | 860 |
| 0,44 %* 2,2,6,6-Tetramethyl-4-piperidyl-octadecanoat | 1 210 | 1 200 |
| 0,25 % 1,2,2,6,6-Pentamethyl-4-piperidyl-octadecanoat | 730 | 780 |
| 0,25 % 2,2,6,6-Tetramethyl-4-piperidyl-docosanoat | 730 | 600 |
| 0,5 %* 2,2,6,6-Tetramethyl-4-piperidyl-docosanoat | 1 230 | 1 230 |
| 0,25 % 1,2,2,6,6-Pentamethyl-4-piperidyl-docosanoat | 750 | 690 |
| 0,5 %* 1,2,2,6,6-Pentamethyl-4-piperidyl-docosanoat | 1 200 | 1 160 |

* Diese Zusatzmenge entspricht, bezogen auf die Wirkgruppenkonzentration, dem Zusatz von 0,25 Massenprozent des handelsüblichen Vergleichsstabilisators Sebacinsäure-bis-2,2,6,6-tetramethyl-4-piperidylester.

Beispiel 6

Nach dem in Beispiel 5 geschilderten Verfahren wurden in das dort charakterisierte Polypropylen die folgenden Rezepturbestandteile eingearbeitet: 0,100 % Pentaerythrityl-tetrakis-3-(3,5-di-tert.-butyl-4-hydroxiphenyl)-propionat, 0,100 % Calciumstearat, 0,125 % UV-Absorber und 0,125 bis 0,250 % des zu untersuchenden Stabilisators.

Die Herstellung und Prüfung der Probekörper erfolgte analog zu Beispiel 5. Der folgenden Tabelle II sind die mit den Stabilisatorkombinationen erzielten Resultate zu entnehmen. Dabei ist festzustellen, daß die auf dem Zugversuch basierende Halbwertszeit hier nur eine eingeschränkte Aussagekraft hat. Mit wachsendem zeitlichen Abstand vom Rißbildungsbeginn weist die Oberfläche der Probekörper eine immer stärker werdende Zerstörung auf, so daß das Eindringen der schädigenden UV-Strahlung infolge Absorption und

Streuung zunehmend behindert wird. Dadurch erfolgt der Abbau der Zugfestigkeit nicht mehr in dem bei unbeschädigter Oberfläche gewohntem Maße.

Tabelle II

| Stabilisator | | Belichtungszeit bis zum(r) Rißbildungsbeginn (h) | Belichtungszeit bis zum(r) Halbwertszeit (h) |
|---|---|---|---|
| 0,125 % | Sebacinsäure-bis-2,2,6,6-tetramethyl-4-piperidylester | 300 | > 1 400 |
| 0,125 % | 2-(3,5-Di-tert.-amyl-2-hydroxyphenyl)-benzotriazol | | |

Tabelle II - Fortsetzung

| Stabilisator | Belichtungszeit bis zum(r) Rißbildungs-beginn (h) | Belichtungszeit bis zum(r) Halbwertszeit (h) |
|---|---|---|
| 0,125 % 2,2,6,6-Tetramethyl-4-piperidyl-octadecanoat<br>0,125 % 2-(3,5-Di-tert.-amyl-2-hydroxyphenyl)-benzotriazol | 1 080 | > 1 600 |
| 0,220 %* 2,2,6,6-Tetramethyl-4-piperidyl-octadecanoat<br>0,125 % 2-(3,5-Di-tert.-amyl-2-hydroxyphenyl)-benzotriazol | 1 450 | > 2 000 |
| 0,125 % 2,2,6,6-Tetramethyl-4-piperidyl-docosanoat<br>0,125 % 2-(3,5-Di-tert.-amyl-2-hydroxyphenyl)-benzotriazol | 420 | > 1 400 |
| 0,250 %* 2,2,6,6-Tetramethyl-4-piperidyl-docosanoat<br>0,125 % 2-(3,5-Di-tert.-amyl-2-hydroxyphenyl)-benzotriazol | 1 320 | > 2 200 |
| 0,125 % 1,2,2,6,6-Pentamethyl-4-piperidyl-docosanoat<br>0,125 % 2-(3,5-Di-tert.-amyl-2-hydroxyphenyl)-benzotriazol | 430 | > 1 300 |
| 0,125 % Sebacinsäure-bis-2,2,6,6-tetramethyl-4-piperidyl-ester<br>0,125 % 2-Hydroxy-4-octoxy-benzophenon | 520 | > 1 300 |

Tabelle II - Fortsetzung

| Stabilisator | | Belichtungszeit bis zum(r) Rißbildungsbeginn (h) | Belichtungszeit bis zum(r) Halbwertszeit (h) |
|---|---|---|---|
| 0,125 % | 2,2,6,6-Tetramethyl-4-piperidyl-octadecanoat | 950 | > 1 600 |
| 0,125 % | 2-Hydroxy-4-octoxy-benzophenon | | |
| 0,220 %* | 2,2,6,6-Tetramethyl-4-piperidyl-octadecanoat | 1 320 | > 1 900 |
| 0,125 % | 2-Hydroxy-4-octoxy-benzophenon | | |

* Diese Zusatzmenge entspricht, bezogen auf die Wirkgruppenkonzentration, dem Zusatz von 0,125 Massenprozent des handelsüblichen Vergleichsstabilisators Sebacinsäure-bis-2,2,6,6-tetramethyl-4-piperidylester.

Wie sich den in den Tabellen I und II zusammengefaßten Ergebnissen entnehmen läßt, weisen die Kombinationen von UV-Absorbern mit den Monocarbonsäureestern des Polyalkylpiperidinols im Vergleich zu den entsprechenden Kombinationen mit TINUVIN 770 eine ausgeprägte synergistische Wirkung auf.

Beispiel 7

Niederdruck-Polyethylen (HDPE) mit dem Schmelzindex MFI 190/5 (DIN 53 735 Code T) von ca. 20 g/10 min und mit einer Dichte von 0,962 $g/cm^3$ sowie enger Molekulargewichtsverteilung (VESTOLEN$^R$ A 6016, Hüls AG) wurde wie im Beispiel 5 beschrieben zu Probekörpern aufbereitet und der Belichtung unterworfen. Die Prüfung der Probekörper erfolgte ebenfalls analog der vorhergehenden Beispiele.

Tabelle III

| Stabilisator | Belichtungszeit bis zum(r) Rißbildungsbeginn (h) | Belichtungszeit bis zum(r) Halbwertszeit (h) |
|---|---|---|
| 0,25 % Sebacinsäure-bis-(2,2,6,6-tetramethyl-4-piperidyl-ester | 430 | 790 |
| 0,25 % 2,2,6,6-Tetramethyl-4-piperidyl-octadecanoat | 350 | 840 |
| 0,44 %* 2,2,6,6-Tetramethyl-4-piperidyl-octadecanoat | 460 | 720 |
| 0,25 % 2,2,6,6-Tetramethyl-4-piperidyl-docosanoat | 450 | >1 130 Oberfl. zerst. |
| 0,50 %* 2,2,6,6-Tetramethyl-4-piperidyl-docosanoat | 670 | 710 |
| 0,125 % Sebacinsäure-bis(2,2,6,6-tetramethyl-4-piperidyl)-ester<br>0,125 % 5-Chlor-2-(3-tert-butyl-2-hydroxy-5-methylphenyl)-benzotriazol | 650 | >1 560 Oberfl. zerst. |
| 0,125 % 2,2,6,6-Tetramethyl-4-piperidyl-octadecanoat<br>0,125 % 5-Chlor-2-(3-tert-butyl-2-hydroxy-5-methylphenyl)-benzotriazol | 710 | 1 260 |
| 0,22 %** 2,2,6,6-Tetramethyl-4-piperidyl-octadecanoat<br>0,125 % 5-Chlor-2-(3-tert-butyl-2-hydroxy-5-methylphenyl)-benzotriazol | 980 | >1 520 |
| 0,125 % 2,2,6,6-Tetramethyl-4-piperidyl-docosanoat<br>0,125 % 5-Chlor-2-(3-tert-butyl-2-hydroxy-5-methylphenyl)-benzotriazol | 770 | 1 180 |

Tabelle III - Fortsetzung

| Stabilisator | Belichtungszeit bis zum(r) Rißbildungs-beginn (h) | Belichtungszeit bis zum(r) Halbwertszeit (h) |
|---|---|---|
| 0,25 %**2,2,6,6-Tetramethyl-4-piperidyl-docosanoat<br>0,125 % 5-Chlor-2-(3-tert-butyl-2-hydroxy-5-methylphenyl)-benzotriazol | 950 | >1 520 |

* siehe Fußnote Tabelle I

** siehe Fußnote Tabelle II

Beispiel 8

In diesem Beispiel findet als Substrat ein Gemisch aus PP und EPDM Verwendung, wie es in der Automobilindustrie zur Herstellung z. B. von Stoßfängern, Spoilern, Rammschutzleisten, eingesetzt wird und welches die folgende Zusammensetzung aufweist

| | |
|---|---|
| 78 Gew.-Teile | VESTOLEN[R] P 6500 (Hüls) |
| 22 Gew.-Teile | BUNA[R] AP 437 (Hüls) |
| 0,1 Gew.-Teile | IRGANOX[R] 1010 (Ciba-Geigy) |
| 0,1 Gew.-Teile | IRGANOX[R] PS 802 (Ciba-Geigy) |
| 0,1 Gew.-Teile | IRGANOX[R] B 225 (Ciba-Geigy) |
| 0,1 Gew.-Teile | Ca-Stearat |
| 0,15 Gew.-Teile | LUPERCO[R] 101 XLS (Luperox) |
| 0,2 Gew.-Teile | EPIKOTE[R] 1004 (Shell) |

Bei VESTOLEN P 6500 handelt es sich um ein Block-Copolymerisat mit einem MFI 190/5 (DIN 53 735 Code T) von ca. 0,5 g/10 min und einer Dichte von 0,904. BUNA AP 437 ist ein EPDM-Terpolymeres mit erhöhtem Ethylengehalt und damit ein Sequenztyp, dessen Mooney Viskosität ML (1 + 4) bei 100 °C ca. 85 beträgt. IRGANOX sind Antioxidantien auf der Basis von 3,5-(Di-tert.butyl-4-hydroxyphenyl)-propionsäureestern des Pentaerythrits oder des Octadecanols, LUPERCO sind peroxidische Katalysatoren und EPIKOTE sind Epoxidharze.

Als Maß für die Lichtschutzwirkung der zu prüfenden Stabilisatoren diente in erster Linie die Expositionszeit bis zum Beginn der Bildung von Oberflächenrissen auf den bestrahlten Spritzgußplatten.

Tabelle IV

| Stabilisator | Belichtungszeit bis zum Rißbildungsbeginn (h) |
|---|---|
| 0,5 % Sebacinsäure-bis(2,2,6,6-tetramethyl-4-piperidyl)-ester | 880 |
| 0,5 % 2,2,6,6-Tetramethyl-4-piperidyl-octadecanoat | 980 |
| 0,5 % 2,2,6,6-Tetramethyl-4-piperidyl-docosanoat | 850 |
| 0,25 % Sebacinsäure-bis(2,2,6,6-tetramethyl-4-piperidyl)-ester<br>0,25 % 5-Chlor-2-(3-tert-butyl-2-hydroxy-5-methylphenyl)-benzotriazol | 1 350 |
| 0,25 % 2,2,6,6-Tetramethyl-4-piperidyl-octadecanoat<br>0,25 % 5-Chlor-2-(3-tert-butyl-2-hydroxy-5-methylphenyl)-benzotriazol | >2 700 |
| 0,25 % 2,2,6,6-Tetramethyl-4-piperidyl-docosanoat<br>0,25 % 5-Chlor-2-(3-tert-butyl-2-hydroxy-5-methylphenyl)-benzotriazol | >2 600 |

## Patentansprüche

**1.** Stabilisatorsystem zur Stabilisierung von Polyolefinen gegen Licht, Wärme und oxidativen Abbau, enthaltend

a) einen Monocarbonsäureester eines Polyalkyl-4-piperidinols der allgemeinen Formel

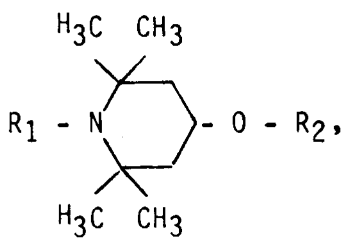

worin $R_1$ Wasserstoff, einen Alkylrest mit 1 bis 5 C-Atomen, einen Allyl- oder Benzylrest oder einen Acylrest mit 1 bis 4 C-Atomen und $R_2$ einen von einer aliphatischen, geradkettigen oder verzweigten und gegebenenfalls ungesättigten Säure mit 16 bis 24 Kohlenstoffatomen abgeleiteten Acylrest bedeuten und

b) einen UV-Absorber vom Benzophenon- oder Benzotriazol-Typ.

**2.** Stabilisatorsystem nach Anspruch 1, dadurch gekennzeichnet, daß die Komponente a) 2,2,6,6-Tetramethyl-4-piperidyl-octadecanoat ist.

**3.** Stabilisatorsystem nach Anspruch 1, dadurch gekennzeichnet, daß die Komponente a) 2,2,6,6-Tetramethyl-4-piperidyl-docosanoat ist.

## Claims

**1.** A stabilizer system for stabilizing polyolefins against degradation by light, heat or oxidation containing

a) a monocarboxylic acid ester of a polyalkyl-4-piperidinol having the general formula

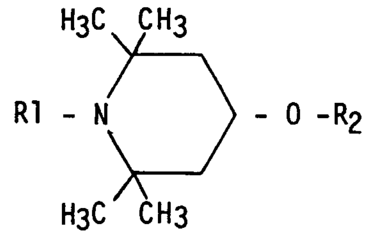

wherein R1 is hydrogen, an alkyl group comprising 1 to 5 C-atoms, an allyl or benzyl group or an acyl group comprising 1 to 4 C-atoms and $R_2$ is an acyl group derived from an aliphatic, straight chain or branched, and optionally unsaturated, acid comprising 16 to 24 carbon atoms, and

b) a UV-absorber of the benzophenone or benzotriazole type.

**2.** A stabilizer system according to claim 1, characterized in that component a) is 2,2,6,6-tetramethyl-4-piperidyl-octadecanoate.

**3.** A stabilizer system according to claim 1, characterized in that component a) is 2,2,6,6-tetramethyl-4-piperidyl-docosanoate.

**Revendications**

**1.** Système d'agents stabilisants en vue de la stabilisation des polyoléfines vis-à-vis de la lumière, de la chaleur et de la décomposition oxydative, renfermant :

a) un ester d'acide monocarboxylique d'un polyalcoyl 4-piperidinol de formule générale :

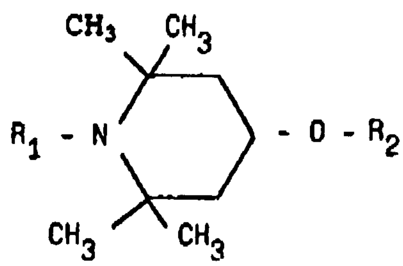

dans laquelle $R_1$ signifie de l'hydrogène, un radical alcoyle ayant de 1 à 5 atomes de carbone, un radical allyle ou benzyle ou un reste acyle ayant de 1 à 4 atomes de carbone et

$R_2$ signifie un reste acyle dérivé d'un acide aliphatique, à chaîne droite ou ramifiée et éventuellement non saturé, ayant de 16 à 24 atomes de carbone et,

b) un absorbant des UV du type benzophénone ou du type benzotriazole.

**2.** Système d'agents stabilisants selon la revendication 1, caractérisé en ce que le composant a) est l'octadecanoate de 2,2,6,6-tétraméthyl-4-piperidyle.

**3.** Système d'agents stabilisants selon la revendication 1, caractérisé en ce que le composant a) est le docosanoate de 2,2,6,6-tétraméthyl-4-piperidyle.